# EUROPEAN PATENT SPECIFICATION

(11) **EP 3 334 106 B1**
(45) Date of publication and mention of the grant of the patent: **28.07.2021**
(21) Application number: 16202555.5
(22) Date of filing: 06.12.2016
(51) Int. Cl.: H04L 12/933, H04L 12/24

(54) **A RECURSIVE CONCENTRATOR CIRCUIT AND ITS APPLICATION AS BUILDING BLOCK OF AN INTERCONNECTION NETWORK**
REKURSIVER KONZENTRATORSCHALTKREIS UND DESSEN ANWENDUNG ALS BAUSTEIN EINES VERBINDUNGSNETZES
CIRCUIT CONCENTRATEUR RÉCURSIF ET SON APPLICATION EN TANT QUE BLOC DE CONSTRUCTION D'UN RÉSEAU D'INTERCONNEXION

(43) Date of publication of application: 13.06.2018
(73) Proprietor: TU Kaiserslautern, 67663 Kaiserslautern (DE)
(72) Inventor: Schneider, Klaus, 67680 Neuhemsbach (DE); Tripti, Jain, 67663 Kaiserslautern (DE)
(74) Representative: Dr. Langfinger & Partner

(56) References cited:
- JAIN TRIPTI ET AL: "The selector-tree network: A new self-routing and non-blocking interconnection network", 2016 11TH INTERNATIONAL SYMPOSIUM ON RECONFIGURABLE COMMUNICATION-CENTRIC SYSTEMS-ON-CHIP (RECOSOC), IEEE, 27 June 2016 (2016-06-27), pages 1-8, XP032938725, DOI: 10.1109/RECOSOC.2016.7533894 [retrieved on 2016-08-04]
- KOPPELMAN D M ET AL: "A SELF-ROUTING PERMUTATION NETWORK", JOURNAL OF PARALLEL AND DISTRIBUTED COMPUTING, ELSEVIER, AMSTERDAM, NL, vol. 10, no. 2, 1 October 1990 (1990-10-01), pages 140-151, XP000150634, ISSN: 0743-7315, DOI: 10.1016/0743-7315(90)90023-I
- MADIHALLY J NARASIMHA: "A RECURSIVE CONCENTRATOR STRUCTURE WITH APPLICATIONS TO SELF- ROUTING SWITHCING NETWORKS", IEEE TRANSACTIONS ON COMMUNICATIONS, IEEE SERVICE CENTER, PISCATAWAY, NJ. USA, vol. 42, no. 2/03/04, 1 February 1994 (1994-02-01), pages 896-898, XP000447369, ISSN: 0090-6778, DOI: 10.1109/TCOMM.1994.580197
- JAIN TRIPTI ET AL: "Verifying the concentration property of permutation networks by BDDs", 2016 ACM/IEEE INTERNATIONAL CONFERENCE ON FORMAL METHODS AND MODELS FOR SYSTEM DESIGN (MEMOCODE), IEEE, 18 November 2016 (2016-11-18), pages 43-53, XP033031603, DOI: 10.1109/MEMCOD.2016.7797744 [retrieved on 2016-12-27]

## Description

The present invention relates to a recursive concentrator circuit and its application as building block of an interconnection network.

Interconnection networks were initially introduced in telephone switching networks and supercomputer clusters, and are now more and more often also used as on-chip networks. In general, one distinguishes thereby between static and dynamic networks.

Static networks provide fixed connections between nodes and can therefore not be reconfigured in case some connections should be broken or other connections would be needed.

Dynamic networks provide reconfigurable connections between nodes and can therefore usually offer more connections with less hardware resources. Most dynamic networks are constructed by arranging k × k crossbar switches (for some small number k like 2) in a certain topology. The connections between input and output nodes of the network are established by setting up these switches which is for some networks however quite challenging.

Some dynamic networks offer a path diversity in that for one and the same pair of components, there is more than one connection which allows a rearranging of existing connections in case conflicts with new connections should occur. Networks that can establish anyone of the n! mappings of n inputs to n outputs are called nonblocking networks.

In general, nonblocking and rearranging networks can be built by so-called concentrator circuits: A (n,m)-concentrator is a circuit with n inputs and m ≤ n outputs that can route any given number k ≤ m of valid inputs to some k of its m outputs. The validity of the inputs may be indicated by an explicit valid bit that indicates that the data of the corresponding input should be sent to one of the m output ports. While it is known that concentrators of linear size exist, the practical implementation of concentrator circuits has to accept less efficient circuits.

A recursive implementation of a concentrator circuit has been proposed by Narasimha in "A recursive concentrator structure with applications to self-routing switching networks", IEEE Transactions on Communications, vol. 42, no. 2-4, pp. 896-898, February/March/April 1994.

For n inputs, this concentrator consists of a column of n/2 crossbar switches receiving the n inputs. The two outputs of each one of these crossbar switches are connected to two (n/2)-concentrators. The Narasimha concentrator circuit has therefore n input and n output ports that route the valid inputs to the outputs with the highest indices.

The two input signals of any crossbar switch in the first column are forwarded to the two (n/2)-concentrators; one to the upper (n/2)-concentrator, the other one to the lower (n/2)-concentrator. The key idea of the concentrator is that the two (n/2)-concentrators receive essentially the same number of active input signals (the first (n/2)-concentrator receives one active input signal more than the second (n/2)-concentrator in case of an odd number of active input signals).

The respective (n/2)-concentrators concentrate and output the valid inputs, and the two concentrated valid input vectors are alternatively transmitted to the respective output ports.

The Narasimha concentrator consists of log₂(n) columns and n/2 rows of 2×2 crossbar switches. The configuration of a switch depends on the configurations of other switches in the same column which results in a linear dependency of the switches of the columns.

To analyze the complexity of a network for growing numbers of inputs n, the following measures are considered: Depth(n) is the length of the longest path through combinational gates in a circuit implementation of the network. It can be seen as a measure for the parallel computation time. Size(n) is the number of gates needed for a circuit implementation of the network where only constant fan-in/fan-out gates are allowed.

The size of Narasimha's concentrator is therefore O(n•log₂(n)) and the depth is O(n). As a result, this concentrator is relatively slow due to its depth of O(n), but its size of O(n•log₂(n)) is comparably good.

Examples of a selector tree network as disclosed by Jain Tripti et al. "The selector-tree network: A new self-routing and non-blocking interconnection network", 2016, 11th International Symposium on Reconfigurable Communication-Centric Systems-on-Chip, IEEE, Pages 1 to 8.

Examples of self-routing networks are disclosed by Koppelman et al. "A Self-Routing Permutation Network", Journal of Parallel and Distributed Computing", ELSEVIER; Amsterdam, Vol. 10, No. 2, 1. October 1990, pages 140 to 151.

The object of the present invention is therefore to improve the depth (runtime) of this concentrator and to provide an improved rearrangeable nonblocking interconnection network based on that concentrator.

This object is solved by a concentrator according to claim 1.

The concentrator according to the invention is an n x n network. Its function is to route all the active inputs to the bottom end of the network's outputs. Each input x[i] includes data bits data(x[i]) and a single valid bit valid(x[i]) such that the valid bit indicates whether the input is active. Since the concentrator according to the invention is designed as a building block of an interconnection network, the data bits comprise of a message msg(x[i]) and a target address tgt(x[i]).

The parities of the number of valid inputs may be computed for each column in parallel using well-known circuits for parallel prefix sums that can compute all parities p[0...n-1] with p[i] := x[0] ⊕ ... ⊕ x[i] with 2 log₂(n)-1 time steps using 2n - log₂(n) - 1 gates (where ⊕ denotes the exclusive-or operation). Having size O(n) and depth O(log₂(n)), this concentrator is significantly faster than the Narasimha concentrator.

According to one embodiment of the present invention, the configuration module comprises a column of n/2 2×2 crossbar switches, each input of these crossbar switches is connected to one of the n global inputs and the outputs of these crossbar switches are connected by the flip shuffle permutation to the inputs of two (n/2)-concentrators that are constructed recursively the same way. Finally, the n global outputs are connected by the butterfly permutation.

Thereby, the n/2 2×2 crossbar switches are configured such that one half of the valid n inputs are routed to one of the two (n/2)-concentrators, while the other half is routed to the other (n/2)-concentrator. In case of an odd number of active inputs, the lower concentrator gets one more active input than the other one.

According to one embodiment of the present invention, the configuration module comprises three modules arranged in a sequence, wherein a first and a second module comprises the control logic for the crossbar switches that are comprised by the third module.

The control logic has to configure the switches such that half of the valid inputs is routed to one of the two (n/2)-concentrators and the other half is routed to the other (n/2)-concentrator.

According to one embodiment of the present invention, the data bits comprise a message msg(x[i]) and a target address tgt(x[i]), wherein the most significant bit (msb) of the target address determines the activity for the concentrator.

The concentrator may be either positive or negative which differs in the definition of active inputs: In case of a positive concentrator an input x[i] is considered to be active if valid(x[i]) & msb(tgt(x[i])) and in case of a negative concentrator an input x[i] is considered to be active if valid(x[i]) & not(msb(tgt(x[i]))).

According to one embodiment of the present disclosure, the first module comprises n elements arranged in a row, each of said elements being connected to a global input, wherein each of this elements is configured and adapted to determine whether an input x[i] is considered to be active.

The purpose of the first module is to determine which inputs are active ones. As explained above, the activity bit is computed as valid(x[i]) & xnor(msb(tgt(x[i])),p) where p is true/false for positive/negative concentrators, respectively. For each one of the n inputs, the first module comprises of a circuit to compute the above formula. These modules are arranged in a column of n of these circuits.

In accordance with one embodiment of the present disclosure, the second module is configured and adapted to compute for all even numbers i the parity bits as p[i] := x[0] *⊕* ... *⊕* x[i] for the activity bits x[i], where *⊕* denotes the exclusive-or operation.

It may thereby be preferred according to one embodiment that the second module is configured and adapted to form a parallel prefix tree in *2* log₂*(n)*-*1* time steps using *2n* - log₂*(n)* - *1* XOR gates to compute said parity bits.

Having computed the activity bits of every input in the first module, the next task is to configure the switches contained in the third. To this end, it has to be computed for all even numbers *i*, the parity bits as *p[i] := x[0] ⊕* ... *⊕ x[i]* for the activity bits *x[i].*

To compute these bits in parallel, the prefixes of all activity bits with the XOR operation, which can be done for all *n* inputs with *O(*log₂*(n))* time steps and *O(n)* gates may be computed.

According to a further embodiment in form of a specialized parity tree computation this may be optimized. The computed prefixes are then used to configure the switches of the leftmost column or cell in parallel.

According to an alternative embodiment, the second module comprises of two modules, wherein the first module comprises n/2 XOR gates and is configured and adapted to compute the parity of inputs x[2i-1] and x[2i] providing y[i] outputs as inputs for the second module. The second module being configured and adapted to compute the parities of the prefixes p[i] := y[0] ⊕ ... ⊕ y[i] = x[0] ⊕ ... ⊕ x[2i] for the activity bits x[i], where ⊕ denotes the exclusive-or operation with a parallel prefix sum network.

As outlined before, this specialized parity tree computation optimizes the needed computations of the prefixes and requires only 1.5*n* - log₂*(n)* - *1* XOR gates and *2*log₂*(n)*-*4* time steps.

Finally, according to one embodiment of the present invention, the prefixes of the parallel prefix sum of the parity bits are used to configure the crossbar switches of the third module in parallel.

Moreover, the present inventions provide a selector-tree interconnection network capable of routing any permutation of its n inputs to its n outputs, wherein the selector-tree network has a fat tree structure. Each node of this fat tree comprises a first and a second selector module in form of a negative and positive (n,n/2)-concentrator, respectively. Each input x[i] includes data bits data(x[i]) and a single valid bit valid(x[i]), the data bits comprise a message msg(x[i]) and a target address tgt(x[i]), wherein all n inputs are connected with both the first and the second selector modules. The negative concentrator is configured and adapted to route the inputs with a negative msb and the positive concentrator is configured and adapted to route the inputs with a positive msb.

A selector module is a special (n,n/2)-concentrator and can serve as a building block in constructing a selector-tree interconnection network. The interconnection network according to the present invention is capable of routing any permutation of its n inputs to its n outputs and is therefore nonblocking. It is also rearranging since the path through the switches for one input/output pair depends on the other connections made at that time.

The topology of the selector-tree network according to the invention follows a fat tree structure, where each node of the fat tree with n inputs has 2 children. The task of the root node is to split the given n inputs into 2 partitions according to their most significant bit of the target addresses so that these can be recursively routed by 2 subnetworks each one having n/2 inputs/outputs.

Assuming that there is no routing conflict in the sense that no input messages i and j should be routed at the same time to the same target address, i.e., it is assumed for all i≠j that tgt(x[i]) ≠ tgt(x[j]) holds, there is a permutation π on {0,...,n-1} such that tgt(x[i]) = π(i) holds. The selector-tree network according to the present invention is capable of implementing every permutation without any difficult setup algorithm as required for other networks.

The nodes of the selector-tree network according the invention with n inputs consist of two selector modules both having n inputs and n/2 outputs. The upper module is a negative concentrator and the lower module is a positive concentrator. Upper and lower shall herby define that there are two different modules, which have a unique identification, and the same could as well be named first and second module instead of upper and lower modul. All inputs are forwarded to both the positive and the negative concentrator modules that consider then the inputs with positive or negative most significant bit of the target address as being active, and will select them for routing to one of its n/2 outputs.

Thereby, according to one embodiment of the present invention, the selector-tree network comprises log₂(n) subsequently arranged columns, wherein in each column positive and negative concentrators are arranged alternately, and wherein column i comprises 2ⁱ⁺¹ selectors. The selectors in the first column are connected with all n inputs and having n/2 outputs. In general, the selectors in the i-th column have n/2ⁱ inputs and n/2ⁱ⁺¹ outputs. Outputs of the selector in the i^{th} column in row j are connected as inputs of the selectors of the next column in rows 2j and 2j+1.

By further decomposing each one of the (n/2)-input selector-trees recursively for the inputs, a network comprising of log₂(n) stages is obtained. For n inputs, this network requires O(log₂(n)³) time and O(n•log₂(n)²) gates and can moreover work in a pipelined mode.

Finally, the present invention provides a use of a concentrator according to the invention as a building block of an interconnection network.

The foregoing aspects and many of the attendant advantages of this invention will become more readily appreciated as the same become better understood by reference to the following detailed description, when taken in conjunction with the accompanying drawing, wherein:
FIG. 1 is a schematic block diagram of an interface of a concentrator circuit according to one embodiment of the present invention;
FIG. 2 is a schematic block diagram showing a recursive construction of the concentrator circuit of FIG. 1;
FIG. 3 is a schematic block diagram of a concentrator according to FIG. 2 with its two configuration modules and a column of switches;
FIG. 4 shows an electrical circuit for computing the activity bits in the leftmost module of FIG. 3 according to one embodiment of the invention;
FIG. 5 is a schematic block diagram showing one embodiment of a second module of FIG. 3 according to the invention for computing parity bits;
FIG. 6 is a schematic block diagram showing a first stage of parity bits computation done in the second module according to FIG. 5;
FIG. 7 is a gate level diagram for computing the parallel prefix sum for n=16 inputs;
FIG. 8 is a circuit diagram of a complete concentrator for eight inputs according to one embodiment of the invention;
FIG. 9 is a schematic block diagram of a selector module according to one embodiment of the present invention;
FIG. 10 shows one embodiment of a recursive construction of the selector-tree interconnection network according to the present invention;
FIG. 11 is a schematic block diagram of a node of the selector-tree of FIG. 10; and
FIG. 12 is a schematic block diagram of a 8 inputs selector-tree network constructed from the selector module according to FIG. 10.

The various embodiments will be described in detail with reference to the accompanying drawings. Wherever possible, the same reference numbers will be used throughout the drawings to refer to the same or like parts. References made to particular examples and implementations are for illustrative purposes, and are not intended to limit the scope of the invention or the claims.

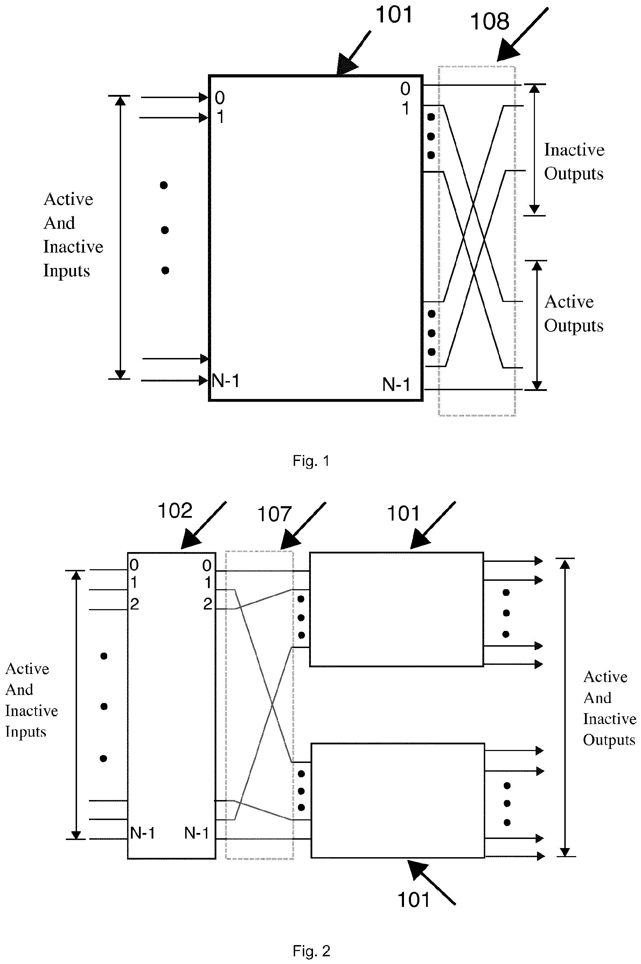

As shown in FIG. 1, the concentrator according to this exemplarily embodiment of the present invention is an n×n network. Its function is to route all the active inputs to the bottom end of the network's outputs. Each input x[i] comprises data bits data(x[i]) and a single valid bit valid(x[i]) such that the valid bit indicates whether the input is valid. The data bits comprise a message msg(x[i]) and a target address tgt(x[i]). Moreover, the concentrator can be either positive or negative which differs in the definition of active inputs: To this end, the most significant bit (msb) of the target address is considered. Input x[i] is considered active by the positive concentrator if valid(x[i]) & msb(tgt(x[i])) holds, while a negative concentrator considers x[i] active if valid(x[i]) & not(msb(tgt(x[i]))) holds. As shown in FIG. 1, the concentrator consists of a butterfly permutation (module 108) and a module 101 which is the main part of the concentrator that routes the active inputs to known outputs (and model 108 permutes these to the bottom end of the network's outputs).

A module 101 for n inputs/outputs can be constructed by two modules 101 with n/2 inputs/outputs and one module numbered as 102 as shown in FIG. 2. The outputs of the module 102 and the inputs of the two modules 101 are interleaved by the flip shuffle permutation (module 107). Module 102 comprises a column of n/2 2×2 crossbar switches and the control logic for configuring these crossbar switches. The control logic has to configure the switches such that half of the active inputs is routed to one of the two modules 101 and the other half is routed to the other module 101. If there is an odd number of active inputs, the lower module 101 gets one more active input than the other one. By decomposing each one of the modules 101 recursively, a network consisting of log₂(n) stages of 2×2 crossbar switches and their control logic for configuring the crossbar switches is obtained.

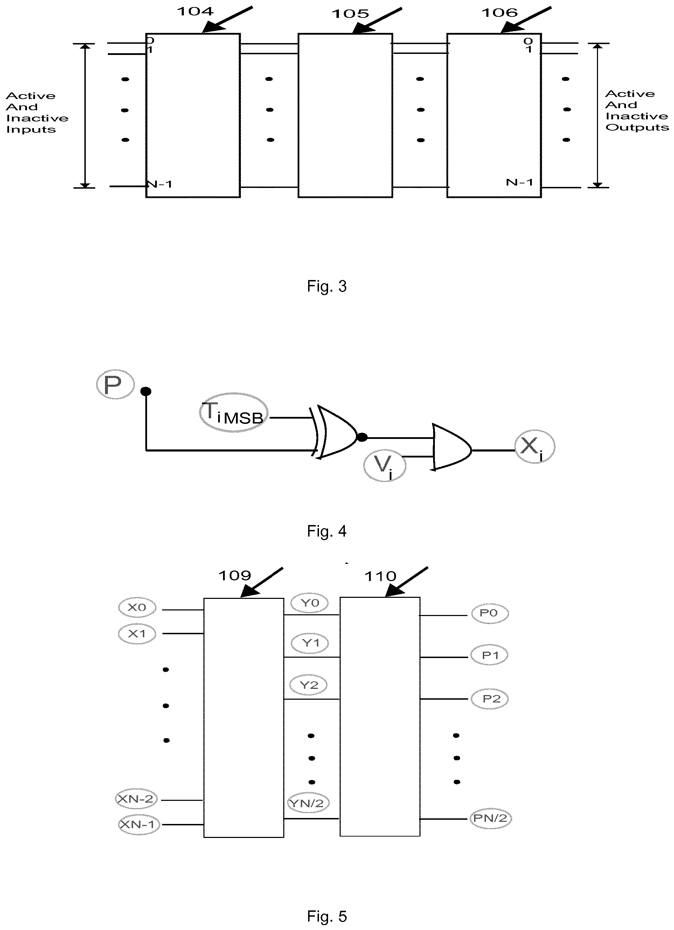

A configuration module of type 102 shown exemplarily in FIG. 2 comprises crossbar switches and the control logic to configure these switches as shown in FIG. 3. As can be seen in FIG. 3, a configuration module 102 is decomposed into three modules, a first module 104, a second module 105 and a third module 106 that are arranged in a sequence to build one module of type 102. The first and the second module 104,105 implement thereby the control logic for the switches that are comprised by the third module 106.

One possible implementation of the first module 104 is given by a column of n circuits as shown in FIG. 4. The purpose of this first module 104 is to determine which inputs are active ones. As explained above, the activity bit is computed as valid(x[i]) & XNOR(msb(tgt(x[i])),p) where p is true/false for positive/negative concentrators, respectively. For n inputs, therefore n of the circuits shown in FIG. 4 in n column are arranged to implement the first module 104.

Having computed the activity bits of every input, the next task is to configure the switches contained in the third module 106 of FIG. 3. To this end, we have to compute for all even numbers i, the parity bits as p[i] := x[0] ⊕ ... ⊕ x[i] for the activity bits x[i]. To compute these bits in parallel, we compute the prefixes of all activity bits with the XOR operation, which can be done for all n inputs with O(log₂(n)) time steps and O(n) gates. These prefixes are then used to configure the switches of module 106 in parallel.

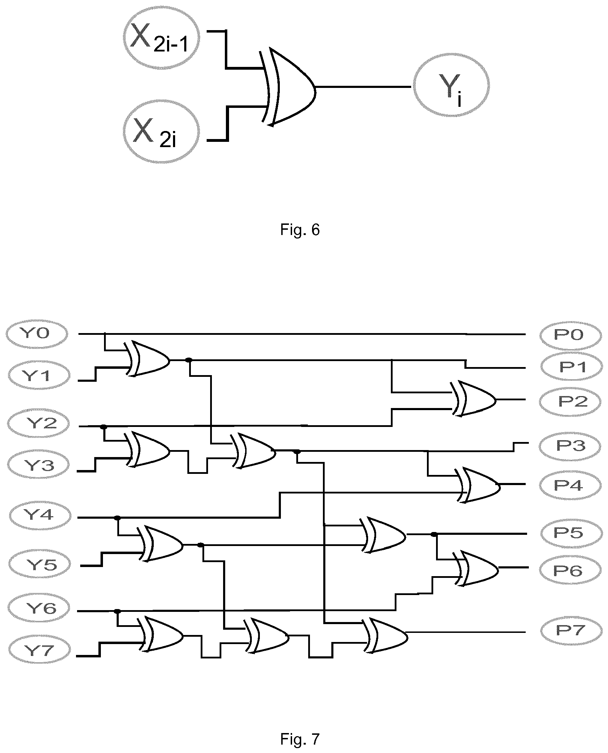

The computation of all even indexed prefixes p[i] can be done according to one embodiment by two stages as shown in FIG. 5: The first stage, denoted as module 109 contains n/2 XOR gates to compute the parity of inputs 2i-1 and 2i as shown in FIG. 6. In this diagram, x[2i-1] and x[2i] denote the activity bits that are the inputs of the i-th row while y[i] denotes the output of the i-th row for i=1,...,n/2-1. Note that for i = 0, the output is same as the input, i.e., y[0] := x[0].

Module 110 therefore receives the n/2 outputs y[i] as computed by module 109 and computes the parities of their prefixes, i.e. p[i] := y[0] ⊕ ... ⊕ y[i] = x[0] ⊕ ... ⊕ x[2i] for the activity bits x[i]. This is done by a work-efficient parallel prefix sum as described in G.E. Blelloch, "Prefix Sums and Their Applications", a chapter of "Synthesis of Parallel Algorithms" edited by J.H. Reif, pp. 35-60, Morgan Kaufmann, 1990 which is shown for n=16 inputs in FIG. 7. The output of the parallel prefix sum configures the 2×2 crossbar switches in module 106.

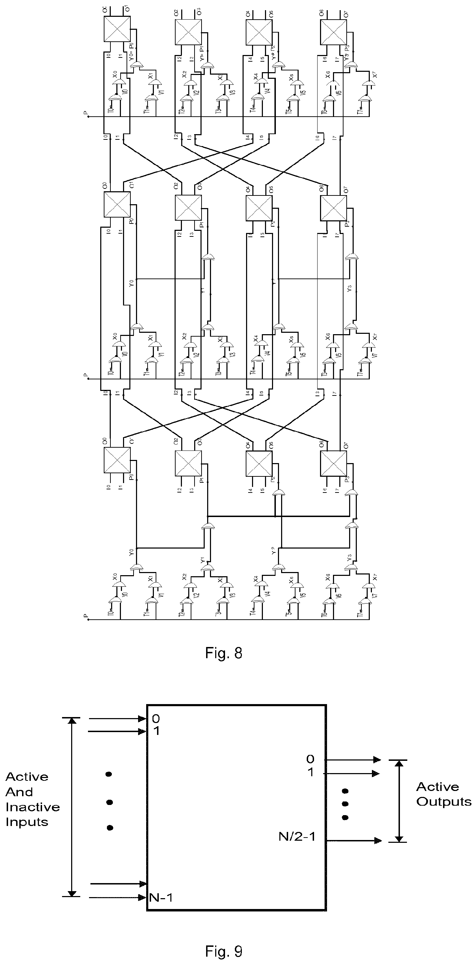

The complete embodiment of a concentrator according to the invention for eight inputs is shown in FIG. 8 without the butterfly permutation (module 108). It has O(log₂(n)) switching stages and O(log₂(n)) control logic stages and requires O(n·log₂(n)) gates in total.

FIG. 9 shows one embodiment of a selector module which is a (n,n/2)-concentrator. A selector module can serve as a building block in constructing a selector-tree interconnection network. This interconnection network is capable of routing any permutation of its n inputs to its n outputs and is therefore non-blocking.

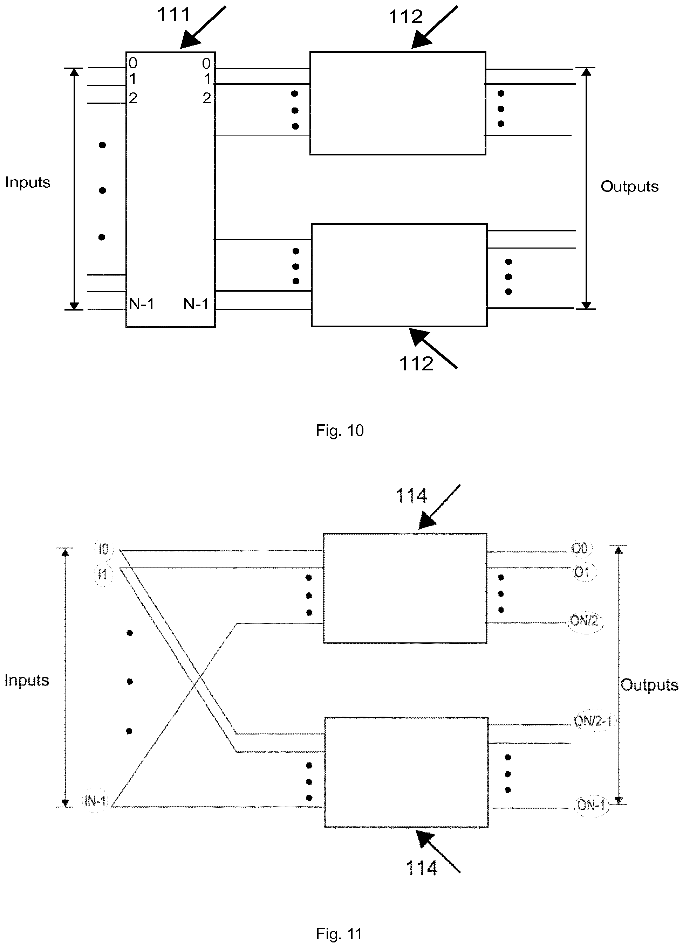

The topology of the selector-tree network according to this embodiment follows a fat tree structure as shown in FIG. 10, where each node of the fat tree with n inputs has 2 children. The task of the root node is to split the given n inputs into 2 partitions according to their most significant bit of the target addresses so that these can be recursively routed by 2 subnetworks (shown as modules 112 in FIG. 10) each one having n/2 inputs/outputs.

While assuming that there is no routing conflict in the sense that no input messages i and j should be routed at the same time to the same target address, i.e., denoting the target address of input i as tgt(x[i]), it is assumed that for all i≠j that tgt(x[i])≠ tgt(x[j]) holds. The selector-tree network is capable of implementing every permutation without any difficult setup algorithm as required for other networks.

As can be seen in FIG. 11, the nodes of the selector-tree network with n inputs consist of two selector modules 114 both having n inputs and n/2 outputs. The upper module is a negative (n,n/2)-concentrator and the lower module is a positive (n,n/2)-concentrator. All inputs are forwarded to both the positive and the negative concentrator modules that consider then the inputs with positive or negative most significant bit of the target address as being active, and will select them for routing to one of its outputs.

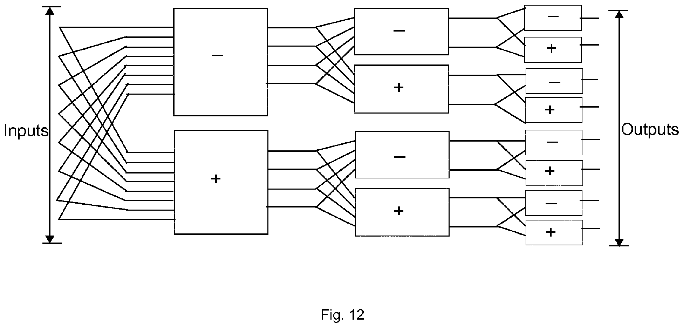

By further decomposing each one of the (n/2)-input selector-tree networks shown as modules 112 in FIG. 10 recursively for eight inputs, we obtain a network consisting of 3 stages as shown in FIG. 12. We can prove that for n inputs, this network requires O(log₂(n)³) time and O(n•log₂(n)²) gates and can moreover work in a pipelined mode.

## Claims

1. A concentrator for a nonblocking interconnection network comprising a plurality of n global inputs and a plurality of n global outputs for processing m active inputs to m outputs, wherein m ≤ n, and wherein each input x[i] includes data bits data(x[i]) and a single valid bit valid(x[i]), wherein the concentrator comprises log₂(n) columns with n/2 rows of 2×2 crossbar switches, wherein the crossbar switches of each of the log₂(n) columns are connected with corresponding crossbar switches of the next column starting from the n global inputs to the n global outputs, wherein a configuration module for configuring the crossbar switches is comprised, wherein the configuration module comprises the first column of n/2 rows of the 2×2 crossbar switches of the concentrator, each input of said crossbar switches is connected to one of the n global inputs and the outputs of said crossbar switches are interleavingly connected by a flip shuffle permutation to the inputs of two internal concentrators with n/2 internal inputs and n/2 internal outputs, wherein said n/2 internal outputs are interleavingly connected to the n global outputs by a butterfly permutation, wherein the configuration of the crossbar switches belonging to a given column is based on the parity of the number of valid inputs of the respective column and wherein the parity of the number of valid inputs of all the columns are computed in parallel, and wherein the parity of the number of valid inputs of a column defines whether the number of valid inputs x[0..i] of said column is even or odd at position i, **characterized in that**
the configuration module yields a binary tree of base modules and the base modules comprise three modules arranged in a sequence, wherein the first and the second module of said three modules comprises the control logic for the crossbar switches of the configuration module and the third module of said three modules comprises said crossbar switches , and wherein the first module comprises n elements arranged in a row, each of said elements being connected to a global input, wherein each of these elements is configured and adapted to determine whether an input x[i] is considered to be active and wherein the second module is configured and adapted to compute for all even numbers i parity bits as p[i] := x[0] ⊕ ... ⊕ x[i] for activity bits x[i], where ⊕ denotes the exclusive-or operation.

2. A concentrator according to claim 1, wherein
the n/2 2×2 crossbar switches are configured such that half of the active n global inputs is routed to each one of the two internal concentrators, wherein in case of an odd number of active inputs, the lower concentrator gets one more active inputs than the other one.

3. A concentrator according to the preceding claims, wherein
the data bits comprises a message msg(x[i]) and a target address tgt(x[i]), wherein the most significant bit, msb, of the target address is considered by the concentratorwhen determining whether an input x[i] is considered to be active.

4. A concentrator according to claim 1, wherein
in case of a positive concentrator an input x[i] is considered to be active if valid(x[i]) & msb(tgt(x[i])) or in case of a negative concentrator an input x[i] is considered to be active if valid(x[i]) & not(msb(tgt(x[i]))), wherein msb indentifies the most significant bit and valid identifies whether the input is active.

5. A concentrator according to any of the preceding claims, wherein
the second module is configured and adapted to execute a parallel prefix tree computation in *2 log₂(n)-1* time steps using *2n* - *log₂(n)* - *1* XOR gates to compute said parity bits.

6. A concentrator according any of the preceding claims, wherein
the second module comprises two sub-modules wherein the first sub-module comprises n/2 XOR gates and is configured and adapted to compute the parity of inputs *x[2i-1]* and *x[2i]* providing *y[i]* outputs as inputs for the second sub-module, the second sub-module being configured and adapted to compute the parities of their prefixes *p[i] := y[0] ⊕* ... *⊕ y[i] = x[0] ⊕* ... *⊕ x[2i]* for the activity bits *x[i],* where *⊕* denotes the exclusive-or operation with a parallel prefix sum network.

7. A concentrator according to claim 6, wherein
the prefixes of the parallel prefix sum of the parity bits is used to configure the crossbar switches of the third module in parallel.

8. Use of a concentrator according to any one of the preceding claims as a building block of an interconnection network.

## Patentansprüche

1. Konzentrator für ein nicht blockierendes Verbindungsnetz, der eine Mehrzahl von n globalen Eingängen und eine Mehrzahl von n globalen Ausgängen zum Verarbeiten von m aktiven Eingängen zu m Ausgängen umfasst, wobei m ≤ n und wobei jeder Eingang x[i] Datenbits Daten(x[i]) und ein einzelnes gültiges Bit gültig(x[i]) enthält, der Konzentrator log₂(n) Spalten mit n/2 Zeilen von 2 × 2 Kreuzschienenschaltern umfasst, die Kreuzschienenschalter jeder der log₂(n) Spalten beginnend von den n globalen Eingängen zu den n globalen Ausgängen mit entsprechenden Kreuzschienenschaltern der nächsten Spalte verbunden sind, ein Konfigurationsmodul zum Konfigurieren des Kreuzschienenschalters enthalten ist, das Konfigurationsmodul die erste Spalte von n/2 Zeilen des 2 × 2 Kreuzschienenschalters des Konzentrators umfasst, jeder Eingang des Kreuzschienenschalters mit einem der n globalen Eingänge verbunden ist und die Ausgänge des Kreuzschienenschalters durch eine Flip-Shuffle-Permutation mit den Eingängen von zwei innenliegenden Konzentratoren mit n/2 innenliegenden Eingängen und n/2 innenliegenden Ausgängen verschachtelt verbunden sind, die n/2 innenliegenden Ausgänge mit den n globalen Ausgängen durch eine Schmetterlingspermutation verschachtelt verbunden sind, die Konfiguration der Kreuzschienenschalter, die einer gegebenen Spalte angehören, die Parität der Anzahl gültiger Eingänge der jeweiligen Spalte als Grundlage verwendet und die Paritäten der mehreren gültigen Eingänge aller Spalten parallel berechnet werden und die Parität der mehreren gültigen Eingänge einer Spalte definiert, ob die Anzahl gültiger Eingänge x[0 ... i] der Spalte bei der Position i geradzahlig oder ungeradzahlig ist,
**dadurch gekennzeichnet, dass**
das Konfigurationsmodul einen Binärbaum von Grundmodulen ergibt und die Grundmodule drei Module umfassen, die in einer Folge angeordnet sind, in der das erste und das zweite Modul der drei Module die Steuerlogik für die Kreuzschienenschalter des Konfigurationsmoduls umfassen und das dritte Modul der drei Module die Kreuzschienenschalter umfasst, wobei das erste Modul n Elemente, die in einer Zeile angeordnet sind, umfasst, jedes der Elemente mit einem globalen Eingang verbunden ist, jedes dieser Elemente konfiguriert und ausgelegt ist, zu bestimmen, ob ein Eingang x[i] als aktiv betrachtet wird, und das zweite Modul konfiguriert und ausgelegt ist, für alle geraden Zahlen i Paritätsbits als p[i] := x[0] ⊕ ... ⊕ x[i] für Aktivitätsbits x[i] zu berechnen, wobei ⊕ die exklusive ODER-Operation bezeichnet.

2. Konzentrator nach Anspruch 1, wobei
die n/2 2 × 2 Kreuzschienenschalter derart konfiguriert sind, dass die Hälfte der n aktiven globalen Eingänge zu jedem der zwei innenliegenden Konzentratoren geleitet wird, und im Falle einer ungeraden Zahl aktiver Eingänge der untere Konzentrator einen aktiven Eingang mehr als der andere erhält.

3. Konzentrator gemäß den vorhergehenden Ansprüchen, wobei
die Datenbits eine Nachricht msg(x[i]) und eine Zieladresse tgt(x[i]) umfassen und das höchstwertige Bit msb der Zieladresse durch den Konzentrator betrachtet wird, wenn bestimmt wird, ob ein Eingang x[i] als aktiv betrachtet wird.

4. Konzentrator nach Anspruch 1, wobei
im Falle eines positiven Konzentrators ein Eingang x[i] als aktiv betrachtet wird, wenn gültig(x[i]) & msb(tgt(x[i])), oder im Falle eines negativen Konzentrators ein Eingang x[i] als aktiv betrachtet wird, wenn gültig(x[i]) & nicht(msb(tgt(x[i]))), wobei msb das höchstwertige Bit identifiziert und gültig identifiziert, ob der Eingang aktiv ist.

5. Konzentrator nach einem der vorhergehenden Ansprüche, wobei
das zweite Modul konfiguriert und ausgelegt ist, eine parallele Präfixbaumberechnung in *2 log₂(n)* - *1* Zeitschritten unter Verwendung von 2*n* - *log₂(n)* - *1* XOR-Gattern auszuführen, um die Paritätsbits zu berechnen.

6. Konzentrator nach einem der vorhergehenden Ansprüche, wobei
das zweite Modul zwei Untermodule umfasst, das erste Untermodul n/*2* XOR-Gatter umfasst und konfiguriert und ausgelegt ist, die Parität der Eingänge *x[2i* - *1]* und *x[2i]* zu berechnen, wodurch *y[i]* Ausgänge als Eingänge für das zweite Untermodul geschaffen werden, und das zweite Untermodul konfiguriert und ausgelegt ist, die Paritäten ihrer Präfixe *p[i] := y[O] ⊕* ... *⊕ y[i]* - *x[O] ⊕* ... *⊕ x[2i]* für die Aktivitätsbits *x[i]* zu berechnen, wobei *⊕* die exklusive ODER-Operation mit einem parallelen Präfixsummennetz bezeichnet.

7. Konzentrator nach Anspruch 6, wobei
die Präfixe der parallelen Präfixsumme der Paritätsbits verwendet werden, um die Kreuzschienenschalter des dritten Moduls parallel zu konfigurieren.

8. Verwendung eines Konzentrators nach einem der vorhergehenden Ansprüche als einen Baustein eines Verbindungsnetzes.

## Revendications

1. Concentrateur pour réseau d'interconnexion non bloquant comprenant une pluralité de n entrées globales et une pluralité de n sorties globales pour traiter m entrées actives en m sorties, dans lequel m ≤ n, et dans lequel chaque entrée x[i] comporte des bits de données, data (x[i]), et un seul bit valide valid(x[i]), le concentrateur comprenant log₂(n) colonnes à n/2 rangées de 2x2 commutateurs crossbar, dans lequel les commutateurs crossbar de chacune des logₑ(n) colonnes sont connectés à des commutateurs crossbar correspondants de la colonne suivante partant des n entrées globales jusqu'aux n sorties globales, dans lequel un module de configuration pour configurer les commutateurs crossbar est compris, dans lequel le module de configuration comprend la première colonne de n/2 rangées des 2x2 commutateurs crossbar du concentrateur, chaque entrée desdits commutateurs crossbar est connectée à une des n entrées globales et les sorties desdits commutateurs crossbar sont connectées de manière entrelacée par une permutation par brassage aux entrées de deux concentrateurs internes à n/2 entrées internes et n/2 sorties internes, dans lequel lesdites n/2 sorties internes sont connectées de manière entrelacée aux n sorties globales par une permutation papillon, dans lequel la configuration des commutateurs crossbar appartenant à une colonne donnée est basée sur la parité du nombre de valeurs valides de la colonne respective et dans lequel la parité du nombre d'entrées valides de toutes les colonnes est calculée en parallèle, et dans lequel la parité du nombre d'entrées valides d'une colonne définie que le nombre d'entrées valides x[0..i] de ladite colonne est pair ou impair à une position i,
**caractérisé en ce que**
le module de configuration produit un arbre binaire de modules de base et les modules de base comprennent trois modules disposés en séquence, dans lequel les premier et deuxième modules desdits trois modules comprennent la logique de commande des commutateurs crossbar du module de configuration et le troisième module desdits trois modules comprend lesdits commutateurs crossbar, et dans lequel le premier module comprend n éléments disposés en rangées, chacun desdits éléments étant connecté à une entrée globale, dans lequel chacun de ces éléments est configuré et adapté pour déterminer qu'une entrée x[i] est considérée active ou non et dans lequel le deuxième module est configuré et adapté pour calculer pour tous les nombres pairs des bits de parité i sous la forme p[i] := x[0] ≤ ⊕ ... ⊕ x[i] pour les bits d'activité x[i], où ⊕ désigne l'opération ou exclusif.

2. Concentrateur selon la revendication 1, dans lequel
les n/2 2x2 commutateurs crossbar sont configurés de telle sorte que la moitié des n entrées globales actives soit routée vers chacun des deux concentrateurs internes, dans lequel dans le cas d'un nombre impair d'entrées actives, le concentrateur inférieur obtient une entrée active de plus que l'autre.

3. Concentrateur selon les revendications précédentes, dans lequel
les bits de données comprennent un message msg(x[i]) et une adresse cible tgt(x[i]), dans lequel le bit de poids fort, msb, de l'adresse ciblée est considéré par le concentrateur lors de la détermination qu'une entrée x[i] est considérée active ou non.

4. Concentrateur selon la revendication 1, dans lequel
dans le cas d'un concentrateur positif une entrée x[i] est considérée active si valid(x[i]) & msb(tgt(x[i])) ou dans le cas d'un concentrateur négatif une entrée x[i] est considérée active si valid(x[i]) & not(msb(tgt(x[i]))), où msb identifie le vit de poids fort et valid identifie que l'entrée est active ou non.

5. Concentrateur selon l'une quelconque des revendications précédentes, dans lequel
le second module est configuré et adapté pour exécuter un calcul d'arbre de préfixes parallèles en *2log₂(n)-1* étapes en utilisant *2n* - *log₂(n)* - *1* portes OU EXCLUSIF pour calculer lesdits bits de parité.

6. Concentrateur selon l'une quelconque des revendications précédentes, dans lequel
le deuxième module comprend deux sous-modules, le premier sous-module comprenant *n*/*2* portes OU EXCLUSIF et étant configuré et adapté pour calculer la parité d'entrées *x[2i-1]* et *x[2i]* fournissant *y[i]* sorties comme entrées du second sous-module, le second sous-module étant configuré et adapté pour calculer les parités de leurs préfixes *p[i]* := y[0] ⊕ ... ⊕ *y[i]* = x[0] ⊕ ... ⊕ *x[2i]* pour les bits d'activité *x[i]*, où ⊕ désigne l'opération ou exclusif avec un réseau de somme de préfixes parallèles.

7. Concentrateur selon la revendication 6, dans lequel
les préfixes de la somme de préfixes parallèles des bits de parité sont utilisés pour configurer les commutateurs crossbar du troisième module en parallèle.

8. Utilisation d'un concentrateur selon l'une quelconque des revendications précédentes comme bloc fonctionnel d'un réseau d'interconnexion.
